# FASCICULE DE BREVET EUROPEEN

(11) **EP 4 598 800 B1**
(45) Date de publication et mention de la délivrance du brevet: **15.07.2026**
(21) Numéro de dépôt: 23762554.6
(22) Date de dépôt: 11.08.2023
(51) Int. Cl.: B62D 35/00

(54) **DÉFLECTEUR À TROIS PIÈCES POUR UN ÉLÉMENT D'UN VÉHICULE**
DREITEILIGER DEFLEKTOR FÜR EIN ELEMENT EINES FAHRZEUGS
THREE-PIECE DEFLECTOR FOR AN ELEMENT OF A VEHICLE

(30) Priorité: 07.10.2022 FR 2210271
(43) Date de publication de la demande: 13.08.2025
(73) Titulaire: Stellantis Auto SAS, 78300 Poissy (FR)
(72) Inventeur: PERON, Rodolphe, 95220 HERBLAY SUR SEINE (FR); ROYER, Guillaume, 91680 BRUYERES LE CHATEL (FR); BOUDAN, Julien, 91210 DRAVEIL (FR); GOURVENNEC, Thibault, 91210 DRAVEIL (FR)
(74) Mandataire: BCIP
(86) Numéro de dépôt international: PCT/FR2023/051265
(87) Numéro de publication internationale: WO 2024/074771

(56) Documents cités:
- WO-A1-2020/196187
- DE-U1- 202015 100 661
- DE-U1- 202017 107 848

## Description

### Domaine technique de l'invention

La présente invention revendique la priorité de la demande française 2210271 déposée le 07 octobre 2022. L'invention concerne les véhicules comprenant au moins un élément externe auquel est solidarisé un déflecteur, et plus précisément de tels déflecteurs.

### Etat de la technique

Certains véhicules, généralement de type automobile, comprennent au moins un élément externe auquel est solidarisé un déflecteur (ou « spoiler ») et généralement situé sur un côté longitudinal (contenant au moins une portière) ou sur un volet de coffre arrière On peut en voir un exemple dans le document WO 2020/196187 A1.

Généralement, les déflecteurs (ou spoilers) sont réalisés en une seule pièce ou en deux pièces. Dans la première alternative (une pièce), le déflecteur comprend une pièce d'aspect (ou un enjoliveur) pourvu(e) de moyens de fixation intégrés pour sa fixation à l'élément externe du véhicule, et donc il y a une forte probabilité que des retassures, résultant du moulage par injection, soient visibles. Dans la seconde alternative (deux pièces), le déflecteur comprend une pièce de support, généralement en partie surmoulée et pourvue de moyens de fixation intégrés pour sa fixation à l'élément externe du véhicule, et une pièce d'aspect (ou un enjoliveur) pourvu(e) de moyens de fixation intégrés pour sa fixation à la pièce de support.

Dans la pratique, chacun de ces deux types de déflecteur, une fois monté sur un élément externe d'un véhicule, est la source de sifflements, du fait du jeu existant entre lui et cet élément externe, et de craquements entre sa pièce de support et sa pièce d'aspect (ou enjoliveur), du fait des matériaux différents dans lesquels elles sont réalisées.

L'invention a donc notamment pour but d'améliorer la situation.

### Présentation de l'invention

Elle propose notamment à cet effet un déflecteur destiné à équiper un élément externe d'un véhicule.

Ce déflecteur se caractérise par le fait qu'il comprend :
- une pièce de support comportant une première face intérieure munie de premiers éléments de couplage propres à coopérer avec des deuxièmes éléments de couplage de l'élément externe pour la solidariser à ce dernier, et un bord périphérique ayant des deuxièmes faces intérieure et extérieure destinées à être orientées respectivement vers l'élément externe et l'extérieur du véhicule,
- un joint d'interface couplé au bord périphérique en ayant des parties intérieure et extérieure placées en regard respectivement des deuxièmes faces intérieure et extérieure afin d'être intercalé entre l'élément externe et la pièce de support, et
- un enjoliveur solidarisé à la pièce de support en étant installé en regard d'une première face extérieure de cette dernière avec interposition de la partie extérieure du joint d'interface.

Ainsi, on a désormais la garantie d'avoir un plaquage sans jeu entre le déflecteur et l'élément externe, une étanchéité à l'air qui empêche la génération de sifflements, et une absence de craquements.

Le déflecteur selon l'invention peut comporter d'autres caractéristiques qui peuvent être prises séparément ou en combinaison, et notamment :
- le bord périphérique peut être muni de troisièmes éléments de couplage. Dans ce cas, le joint d'interface peut être muni de quatrièmes éléments de couplage coopérant avec ces troisièmes éléments de couplage pour le coupler à la pièce de support ;
- en présence de la première option, les troisièmes éléments de couplage peuvent être définis sur la deuxième face extérieure du bord périphérique. Dans ce cas, les quatrièmes éléments de couplage peuvent être définis sur une troisième face intérieure du joint d'interface destinée à être orientée vers la pièce de support ;
- également en présence de la première option, les troisièmes éléments de couplage peuvent être agencés sous la forme de logements. Dans ce cas, les quatrièmes éléments de couplage peuvent être agencés sous la forme de protubérances logées respectivement dans les logements correspondants ;
- au moins un premier élément de couplage de la pièce de support peut être agencé sous la forme d'une patte qui est propre à être introduite dans un logement correspondant de l'élément externe, constituant l'un des deuxièmes éléments de couplage de ce dernier, pour coupler et positionner la pièce de support par rapport à ce dernier, et au moins un autre premier élément de couplage de la pièce de support peut être agencé sous la forme d'un trou fileté qui est propre à être placé en regard d'un trou traversant correspondant, défini dans une paroi de l'élément externe, constituant un autre des deuxièmes éléments de couplage et propre à être traversé par une vis destinée à être vissée dans ce trou fileté ;
- en présence de la dernière option, la pièce de support peut comprendre au moins deux premiers éléments de couplage agencés sous la forme de pattes en forme générale de L ;
- son enjoliveur peut comprendre une quatrième face intérieure orientée vers la première face extérieure de la pièce de support et comprenant des pattes de fixation traversant des trous traversants définis dans le joint d'interface et repliées contre la deuxième face intérieure du bord périphérique afin d'immobiliser le joint d'interface ;
- en présence de la dernière option, les trous traversants peuvent être définis dans le joint d'interface au-dessus de quatrièmes éléments de couplage supérieurs et en-dessous de quatrièmes éléments de couplage inférieurs.

L'invention propose également un véhicule, éventuellement de type automobile, et comprenant au moins un élément externe auquel est solidarisé un déflecteur du type de celui présenté ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective et partiellement en coupe, une toute petite partie d'un véhicule comprenant un élément externe auquel est solidarisé un exemple de réalisation d'un déflecteur selon l'invention,
[Fig. 2] illustre schématiquement, dans une vue en perspective du côté intérieur, un exemple de réalisation d'un déflecteur selon l'invention, avant sa solidarisation à un élément externe d'un véhicule,
[Fig. 3] illustre schématiquement, dans une vue en perspective du côté extérieur, les trois pièces constituant le déflecteur des figures 1 et 2,
[Fig. 4] illustre schématiquement, dans une vue en perspective du côté de la face intérieure, la pièce de support du déflecteur des figures 1 à 3,
[Fig. 5] illustre schématiquement, dans une vue en perspective du côté de la face extérieure, la pièce de support du déflecteur des figures 1 à 4,
[Fig. 6] illustre schématiquement, dans une vue en perspective du côté de la face intérieure, le joint d'interface du déflecteur des figures 1 à 3,
[Fig. 7] illustre schématiquement, dans une vue en perspective du côté de la face extérieure, le joint d'interface du déflecteur des figures 1 à 3,
[Fig. 8] illustre schématiquement, dans une vue en perspective du côté de la face extérieure, un premier élément de couplage de la pièce de support des figures 4 et 5,
[Fig. 9] illustre schématiquement, dans une vue en perspective du côté de la face intérieure, un deuxième élément de couplage du joint d'interface des figures 6 et 7,
[Fig. 10] illustre schématiquement, dans une vue en perspective du côté extérieur et partiellement en coupe, les positions relatives des trois pièces du déflecteur des figures 1 à 3 dans la partie supérieure de ce dernier,
[Fig. 11] illustre schématiquement, dans une vue en perspective du côté intérieur, les positions relatives des trois pièces du déflecteur des figures 1 à 3 dans la partie supérieure de ce dernier, et
[Fig. 12] illustre schématiquement, dans une vue en perspective du côté extérieur, une partie d'un élément externe d'un véhicule et la pièce de support des figures 4 et 5 avant sa solidarisation à cet élément externe.

### Description détaillée de l'invention

L'invention a notamment pour but de proposer un déflecteur DV destiné à équiper un élément externe EE d'un véhicule.

Dans ce qui suit, on considère, à titre d'exemple non limitatif, que le déflecteur DV est destiné à faire partie d'un véhicule automobile V, comme par exemple une voiture. Mais l'invention n'est pas limitée à ce type de véhicule. Elle concerne en effet tout véhicule (terrestre, maritime (ou fluvial), ou aérien) comprenant au moins un élément externe auquel peut être solidarisé un déflecteur (ou spoiler).

Par ailleurs, on considère sans ce qui suit, à titre d'exemple non limitatif, que le déflecteur DV est destiné à être solidarisé fixement à un élément externe EE latéral, car situé sur un côté longitudinal d'un véhicule V (ici une voiture), et faisant partie de la caisse de ce véhicule V. Mais l'élément externe EE peut être installé dans n'importe quelle partie d'un véhicule, et notamment sur un volet de coffre arrière.

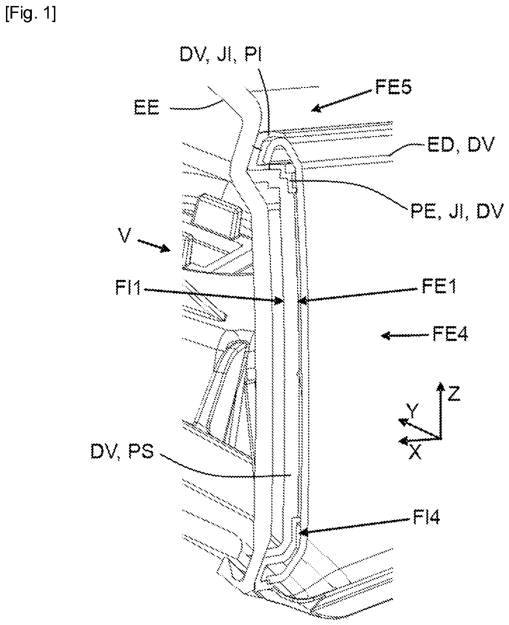

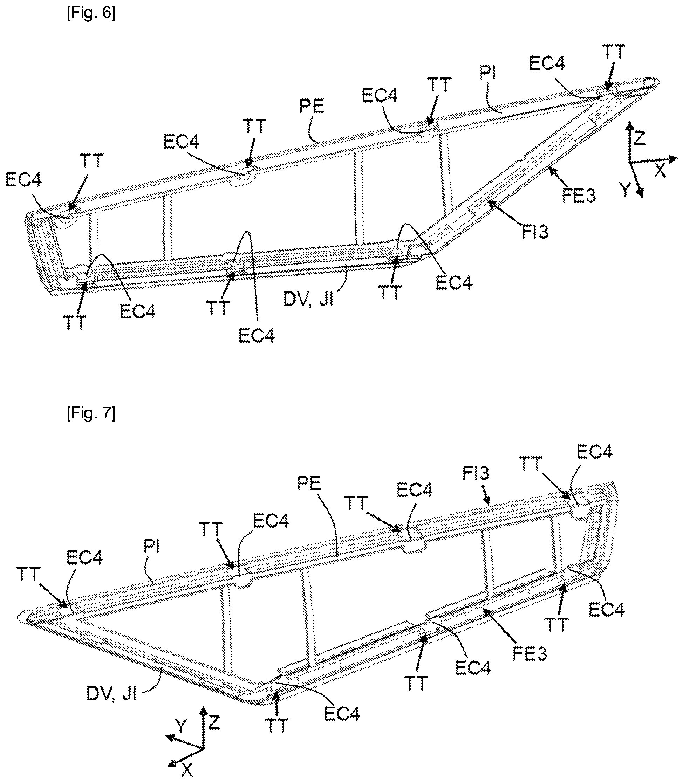

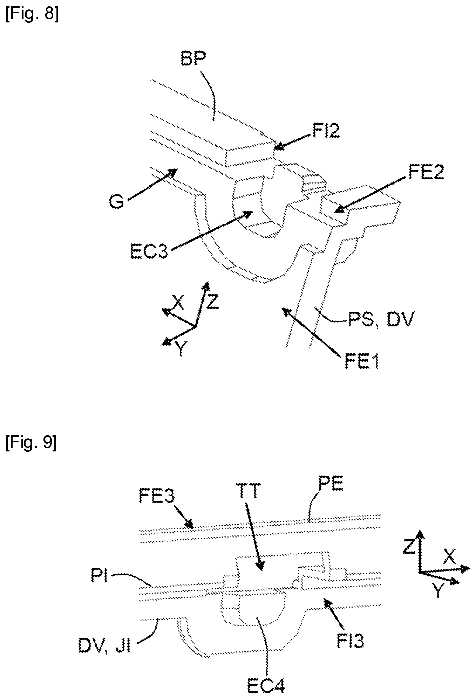

Sur les figures 1 à 12 la direction X est la direction longitudinale du véhicule V, laquelle est sensiblement parallèle aux côtés latéraux (ou longitudinaux) comportant les portières latérales, la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

Dans ce qui précède et ce qui suit, la notion « d'intérieur » est définie par rapport à l'intérieur du véhicule V, et donc désigne un élément orienté vers l'intérieur du véhicule V et par conséquent opposé à l'extérieur du véhicule V, et la notion « d'extérieur » désigne un élément orienté vers l'extérieur du véhicule V.

On a schématiquement illustré sur la figure 1, une toute petite partie d'un véhicule V comprenant un élément externe EE (ici latéral) auquel est solidarisé un exemple de réalisation d'un déflecteur DV selon l'invention.

Comme illustré sur les figures 1 à 3, un déflecteur DV, selon l'invention, comprend une pièce de support PS, un joint d'interface JI et un enjoliveur (ou pièce d'aspect) ED.

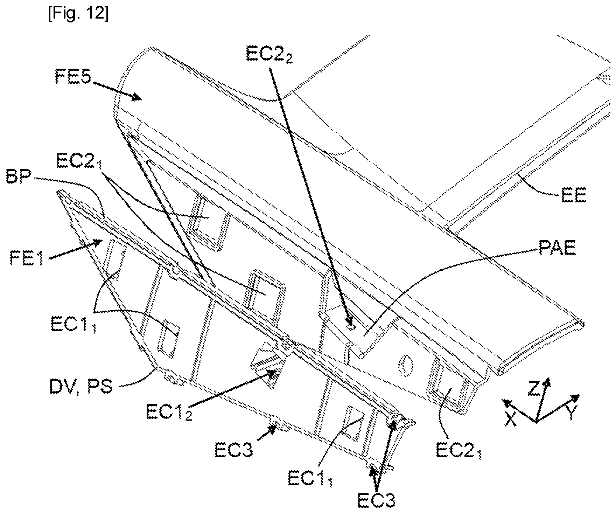

La pièce de support PS comprend une première face intérieure FI1 destinée à être orientée vers une (cinquième) face extérieure FE5 de l'élément externe EE (voir figures 1 et 12), et une première face extérieure FE1. Comme illustré au moins partiellement sur les figures 1, 4 et 12, la première face intérieure FI1 est munie de premiers éléments de couplage EC1ⱼ qui sont propres à coopérer avec des deuxièmes éléments de couplage EC2ⱼ définis sur la cinquième face extérieure FE5 de l'élément externe EE pour solidariser la pièce de support PS à ce dernier (EE).

De plus, cette pièce de support PS comprend un bord périphérique BP qui a des deuxièmes faces intérieure FI2 et extérieure FE2 destinées à être orientées respectivement vers la cinquième face extérieure FE5 de l'élément externe EE et l'extérieur du véhicule V.

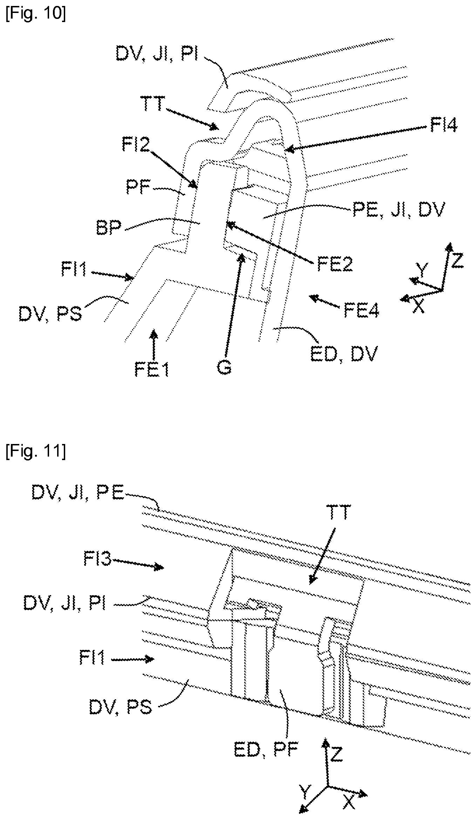

Comme illustré au moins partiellement sur les figures 1, 3, 6 et 7, le joint d'interface JI a une forme générale similaire à celle du bord périphérique BP de la pièce de support PS afin d'être couplé à ce bord périphérique BP en ayant une partie intérieure PI placée en regard de la deuxième face intérieure FI2 et une partie extérieure PE placée en regard de la deuxième face extérieure FE2. Ce joint d'interface JI comprend une troisième face intérieure FI3 sur laquelle saille la partie intérieure PI et orientée vers la première face extérieure FE1 de la paroi de support PS, et une troisième face extérieure FE3 sur laquelle saille la partie extérieure PE et orientée vers une quatrième face intérieure FI4 de l'enjoliveur ED. Ainsi, et comme illustré sur la figure 10, la partie intérieure PI du joint d'interface JI est intercalée entre l'élément externe EE et la pièce de support PS, et, comme indiqué dans le paragraphe suivant, la partie extérieure PE du joint d'interface JI est intercalée entre la pièce de support PS et l'enjoliveur ED.

Comme illustré au moins partiellement sur les figures 1 à 3 et 10, l'enjoliveur (ou pièce d'aspect) ED est solidarisé à la pièce de support PS en étant installé en regard de la première face extérieure FE1 de cette dernière (PS) avec interposition de la partie extérieure PE du joint d'interface JI. Cet enjoliveur ED comprend donc une quatrième face intérieure FI4 orientée vers la première face extérieure FE1 de la pièce de support PS et la troisième face extérieure FE3 du joint d'interface JI, et une quatrième face extérieure FE4 au contact de l'air extérieur.

Grâce à ce joint d'interface JI installé devant les deuxièmes faces intérieure FI2 et extérieure FE2 du bord périphérique BP de la paroi de support PS, on a désormais i) la garantie d'avoir un plaquage sans jeu entre le déflecteur DV et l'élément externe EE, ce qui permet d'éviter les grincements ou entrechoquements et d'avoir une qualité d'assemblage parfaite, ii) une étanchéité à l'air qui empêche la génération de sifflements pendant les phases de roulage, et iii) une absence de craquements entre la pièce de support PS et l'enjoliveur ED, ce qui permet de les réaliser dans des matériaux différents. En outre, il est aussi possible de remplacer l'enjoliveur ED lorsqu'il est rayé ou cassé, sans qu'il faille remplacer la pièce de support PS.

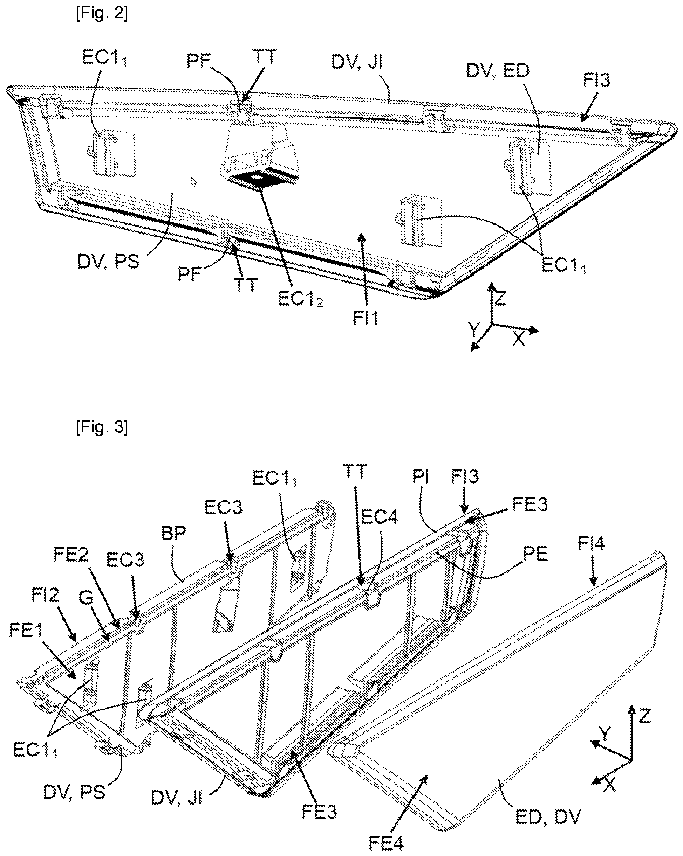

Par exemple, et comme illustré non limitativement et au moins partiellement sur les figures 3 à 9, le bord périphérique BP peut être muni de troisièmes éléments de couplage EC3, et le joint d'interface JI peut être muni de quatrièmes éléments de couplage EC4 qui coopèrent avec les troisièmes éléments de couplage EC3 pour le coupler à la pièce de support PS.

Egalement par exemple, et comme illustré non limitativement et au moins partiellement sur les figures 3 à 9, les troisièmes éléments de couplage EC3 peuvent être définis sur la deuxième face extérieure FE2 du bord périphérique BP, et les quatrièmes éléments de couplage EC4 peuvent être définis sur la troisième face intérieure FI3 du joint d'interface JI. Mais dans une variante de réalisation non illustrée, les troisièmes éléments de couplage EC3 pourraient être définis sur la deuxième face intérieure FI2 du bord périphérique BP, et les quatrièmes éléments de couplage EC4 pourraient être définis sur la troisième face extérieure FI3 du joint d'interface JI.

Egalement par exemple, et comme illustré non limitativement et au moins partiellement sur les figures 3 à 9, les troisièmes éléments de couplage EC3 peuvent être agencés sous la forme de logements, et les quatrièmes éléments de couplage EC4 peuvent être agencés sous la forme de protubérances qui sont logées respectivement dans les logements EC3 correspondants. On comprendra que chaque logement EC3 a une « forme technique » adaptée à la réception, de préférence étroite, de la protubérance EC4 correspondante. Mais dans une variante de réalisation non illustrée, les quatrièmes éléments de couplage EC4 pourraient être agencés sous la forme de logements, et les troisièmes éléments de couplage EC3 pourraient être agencés sous la forme de protubérances logées respectivement dans les logements EC4 correspondants.

On notera, comme illustré non limitativement sur les figures 3, 5 et 8, que la pièce de support PS peut comprendre sur une partie au moins de son bord périphérique BP (ici la partie supérieure), et par exemple sur sa première face extérieure FE1, une gorge G destinée à loger une portion de la partie extérieure PE du joint d'interface JI. Cela permet d'optimiser le maintien du joint d'interface JI, la continuité du plaquage, et l'étanchéité à l'air.

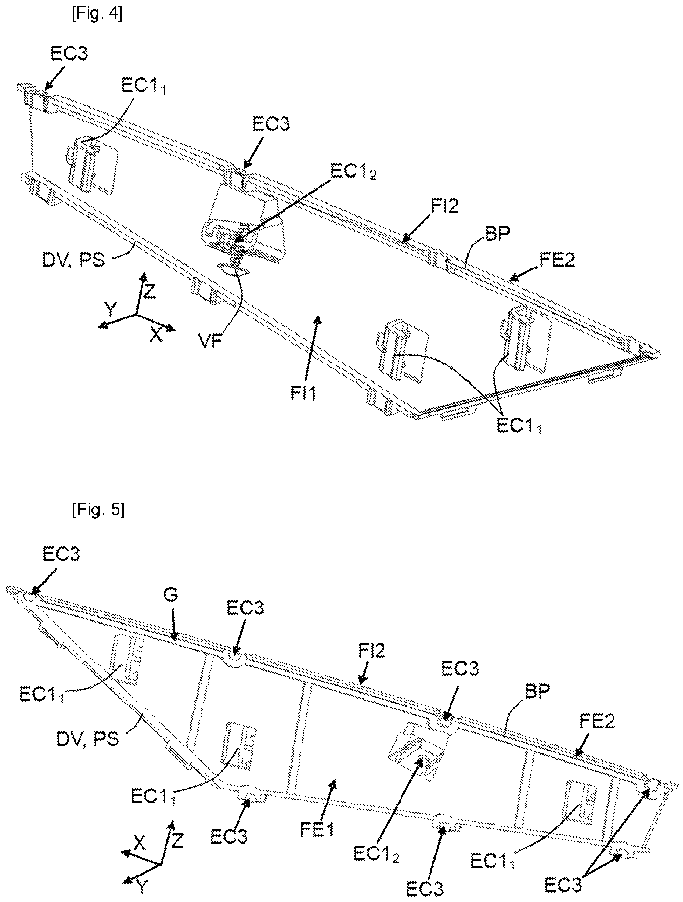

Egalement par exemple, et comme illustré non limitativement et au moins partiellement sur les figures 2, 4, 5 et 12, les premier éléments de couplage EC1ⱼ de la pièce de support PS peuvent être de deux types différents (j = 1 ou 2), et dans ce cas les deuxièmes éléments de couplage EC2ⱼ sont aussi de deux types différents (j = 1 ou 2). En présence de cette option, au moins un premier élément de couplage EC1₁ (j = 1) de la pièce de support PS peut être agencé sous la forme d'une patte qui est propre à être introduite dans un logement correspondant de l'élément externe EE qui constitue alors l'un des deuxièmes éléments de couplage EC2₁ de ce dernier (EE). Chaque patte EC1₁ représente le premier type et permet de coupler et positionner la pièce de support PS par rapport à l'élément externe EE. De plus, au moins un autre premier élément de couplage EC1₂ (j = 2) de la pièce de support PS peut être agencé sous la forme d'un trou fileté. Chaque trou fileté EC1₂ représente le second type et est propre à être placé en regard d'un trou traversant correspondant, défini dans une paroi PAE de l'élément externe EE et qui constitue un autre (EC2₂) des deuxièmes éléments de couplage EC2ⱼ. Chaque trou traversant EC2₂ est propre à être traversé par une vis VF qui est destinée à être vissée dans le trou fileté EC1₂, comme illustré sur la figure 4. Dans une variante de réalisation non illustrée, chaque trou traversant EC2₂ pourrait être un trou de clippage dans lequel on vient clipper une patte de clippage constituant un premier élément de couplage EC1₂ (du second type) de la pièce de support PS.

On notera que dans l'exemple illustré non limitativement sur les figures 2, 4, 5 et 12, chaque premier élément de couplage EC1₁ (du premier type) de la pièce de support PS est agencé sous la forme d'une patte en forme générale de L. En présence d'un tel agencement, et comme cela est partiellement illustré sur la figure 12, le couplage du déflecteur DV à l'élément externe EE se fait en translatant suivant la direction transversale Y le déflecteur DV vers l'élément externe EE afin d'introduire chaque patte EC1₁ de la pièce de support PS dans le logement EC2₁ correspondant, puis en translatant suivant la direction longitudinale X le déflecteur DV par rapport à l'élément externe EE afin qu'une partie de chaque patte EC1₁ traverse une ouverture définie dans le logement EC2₁ correspondant.

On notera également, comme illustré non limitativement sur les figures 2, 4, 5 et 12, que la pièce de support PS peut comprendre au moins deux premiers éléments de couplage EC1₁ agencés sous la forme de pattes en forme générale de L. En fait, dans l'exemple illustré, elle comprend trois premiers éléments de couplage EC1₁. Mais le nombre de premiers éléments de couplage EC1₁ peut prendre n'importe quelle valeur supérieure ou égale à un. Par ailleurs, dans l'exemple illustré, la pièce de support PS ne comprend qu'un seul premier élément de couplage EC1₂ agencé sous la forme d'un trou fileté. Mais le nombre de premiers éléments de couplage EC1₂ peut prendre n'importe quelle valeur supérieure ou égale à un.

Egalement par exemple, et comme illustré non limitativement et au moins partiellement sur les figures 2, 10 et 12, la quatrième face intérieure FI4 de l'enjoliveur ED, qui est orientée vers la première face extérieure FE1 de la pièce de support PS, peut comprendre des pattes de fixation PF. Ces dernières (PF) traversent des trous traversants TT définis dans le joint d'interface JI et sont repliées contre la deuxième face intérieure FI2 du bord périphérique BP afin d'immobiliser le joint d'interface JI. On comprendra en effet qu'une partie du joint d'interface JI se retrouve intercalée étroitement entre la quatrième face intérieure FI4 de l'enjoliveur ED et la première face extérieure FE1 de la pièce de support PS, et immobilisée par rapport à cette dernière (PS) par le repliement des pattes de fixation PF qui traversent les trous traversants TT.

En présence de la dernière option, et comme illustré non limitativement et au moins partiellement sur les figures 3, 6, 7, 9 et 10, les trous traversants TT peuvent être définis dans le joint d'interface JI au-dessus de quatrièmes éléments de couplage EC4 supérieurs et en-dessous de quatrièmes éléments de couplage EC4 inférieurs. Mais dans une variante de réalisation non illustrée, les trous traversants TT pourraient être décalés par rapport aux quatrièmes éléments de couplage EC4.

Par exemple, l'enjoliveur ED peut être réalisé en aluminium, puis éventuellement peint. L'aluminium permet de faciliter le repliement des pattes de fixation PF contre la deuxième face intérieure FI2 du bord périphérique BP après avoir traversé des trous traversants TT. Mais d'autres matériaux métalliques permettant un tel repliement peuvent être utilisés.

Egalement par exemple, la pièce de support PS peut être réalisée par moulage d'une matière plastique ou synthétique rigide (comme par exemple du polycarbonate (ou PC) ou un mélange de polycarbonate et d'acrylonitrile butadiène styrène (ou ABS PC)).

Egalement par exemple, le joint d'interface JI peut être réalisé par moulage d'une matière souple de type élastomère. Ainsi, il peut, par exemple, être réalisé en Ethylène-Propylène-Diène Monomère (ou EPDM).

## Revendications

1. Déflecteur (DV) propre à équiper un élément externe (EE) d'un véhicule (V), **caractérisé en ce qu'**il comprend i) une pièce de support (PS) comportant une première face intérieure (FI1) munie de premiers éléments de couplage (EC1ⱼ) propres à coopérer avec des deuxièmes éléments de couplage (EC2ⱼ) dudit élément externe (EE) pour la solidariser à ce dernier (EE), et un bord périphérique (BP) ayant des deuxièmes faces intérieure (FI2) et extérieure (FE2) destinées à être orientées respectivement vers ledit élément externe (EE) et l'extérieur dudit véhicule (V), ii) un joint d'interface (JI) couplé audit bord périphérique (BP) en ayant des parties intérieure (PI) et extérieure (PE) placées en regard respectivement desdites deuxièmes faces intérieure (FI2) et extérieure (FE2) afin d'être intercalé entre ledit élément externe (EE) et ladite pièce de support (PS), et iii) un enjoliveur (ED) solidarisé à ladite pièce de support (PS) en étant installé en regard d'une première face extérieure (FE1) de cette dernière (PS) avec interposition de ladite partie extérieure (PE) du joint d'interface (JI).

2. Déflecteur selon la revendication 1, **caractérisé en ce que** ledit bord périphérique (BP) est muni de troisièmes éléments de couplage (EC3), et **en ce que** ledit joint d'interface (JI) est muni de quatrièmes éléments de couplage (EC4) coopérant avec lesdits troisièmes éléments de couplage (EC3) pour le coupler à ladite pièce de support (PS).

3. Déflecteur selon la revendication 2, **caractérisé en ce que** lesdits troisièmes éléments de couplage (EC3) sont définis sur ladite deuxième face extérieure (FE2) dudit bord périphérique (BP), et **en ce que** lesdits quatrièmes éléments de couplage (EC4) sont définis sur une troisième face intérieure (FI3) dudit joint d'interface (JI) destinée à être orientée vers ladite pièce de support (PS).

4. Déflecteur selon la revendication 2 ou 3, **caractérisé en ce que** lesdits troisièmes éléments de couplage (EC3) sont agencés sous la forme de logements, et **en ce que** lesdits quatrièmes éléments de couplage (EC4) sont agencés sous la forme de protubérances logées respectivement dans lesdits logements (EC3) correspondants.

5. Déflecteur selon l'une des revendications 1 à 4, **caractérisé en ce qu'**au moins un premier élément de couplage (EC1₁) de ladite pièce de support (PS) est agencé sous la forme d'une patte propre à être introduite dans un logement correspondant dudit élément externe (EE), constituant l'un desdits deuxièmes éléments de couplage (EC2₁) de ce dernier (EE), pour coupler et positionner ladite pièce de support (PS) par rapport à cet élément externe (EE), et au moins un autre premier élément de couplage (EC1₂) de ladite pièce de support (PS) est agencé sous la forme d'un trou fileté propre à être placé en regard d'un trou traversant correspondant, défini dans une paroi (PAE) dudit élément externe (EE), constituant un autre (EC2₂) desdits deuxièmes éléments de couplage (EC2ⱼ) et propre à être traversé par une vis (VF) destinée à être vissée dans ledit trou fileté (EC1₂).

6. Déflecteur selon la revendication 5, **caractérisé en ce que** ladite pièce de support (PS) comprend au moins deux premiers éléments de couplage (EC1₁) agencés sous la forme de pattes en forme générale de L.

7. Déflecteur selon l'une des revendications 1 à 6, **caractérisé en ce que** ledit enjoliveur (ED) comprend une quatrième face intérieure (FI4) orientée vers ladite première face extérieure (FE1) de la pièce de support (PS) et comprenant des pattes de fixation (PF) traversant des trous traversants (TT) définis dans ledit joint d'interface (JI) et repliées contre ladite deuxième face intérieure (FI2) du bord périphérique (BP) afin d'immobiliser ledit joint d'interface (JI).

8. Déflecteur selon la revendication 7, **caractérisé en ce que** lesdits trous traversants (TT) sont définis dans ledit joint d'interface (JI) au-dessus de quatrièmes éléments de couplage (EC4) supérieurs et en-dessous de quatrièmes éléments de couplage (EC4) inférieurs.

9. Véhicule (V) comprenant au moins un élément externe (EE), **caractérisé en ce qu'**il comprend au moins un déflecteur (DV) selon l'une des revendications 1 à 8, solidarisé audit élément externe (EE).

10. Véhicule selon la revendication 9, **caractérisé en ce qu'**il est de type automobile.

## Patentansprüche

1. Deflektor (DV), der zur Ausrüstung eines äußeren Elements (EE) eines Fahrzeugs (V) geeignet ist, **dadurch gekennzeichnet, dass** er i) ein Trägerteil (PS) umfasst, das eine erste Innenfläche (FI1), die mit ersten Kupplungselementen (EC1j) versehen ist, die geeignet sind, mit zweiten Kupplungselementen (EC2j) des äußeren Elements (EE) zusammenzuwirken, um sie mit diesem (EE) zu verbinden, und einen Umfangsrand (BP) mit zweiten Innenflächen (FI2) und Außenflächen (FE2), die jeweils zum äußeren Element (EE) und zum äußeren Fahrzeug hin gerichtet sind, umfasst (V), ii) eine Schnittstellendichtung (JI), die mit dem Umfangsrand (BP) verbunden ist, wobei innere (PI) und äußere (PE) Abschnitte jeweils gegenüber der zweiten inneren (FI2) und äußeren (FE2) Seite angeordnet sind, um zwischen dem äußeren Element (EE) und dem Trägerteil (PS) eingefügt zu werden, und iii) eine Zierkappe (ED), die mit dem Trägerteil (PS) fest verbunden ist, indem sie gegenüber einer ersten äußeren Fläche (FE1) desselben (PS) unter Zwischenschaltung des äußeren Teils (PE) der Schnittstellendichtung (JI) angebracht ist.

2. Deflektor nach Anspruch 1, **dadurch gekennzeichnet, dass** die Umfangskante (BP) mit dritten Kopplungselementen (EC3) versehen ist, und dass die Schnittstellendichtung (JI) mit vierten Kopplungselementen (EC4) versehen ist, die mit den dritten Kopplungselementen (EC3) zusammenwirken, um sie mit dem Trägerteil (PS) zu koppeln.

3. Deflektor nach Anspruch 2, **dadurch gekennzeichnet, dass** die dritten Kopplungselemente (EC3) auf der zweiten Außenfläche (FE2) der Umfangskante (BP) definiert sind, und dass die vierten Kopplungselemente (EC4) auf einer dritten Innenfläche (FI3) der Schnittstellendichtung (JI) definiert sind, die dem Trägerteil (PS) zugewandt ist.

4. Deflektor nach Anspruch 2 oder 3, **dadurch gekennzeichnet, dass** die dritten Kopplungselemente (EC3) als Aufnahmen angeordnet sind, und dass die vierten Kopplungselemente (EC4) als Vorsprünge angeordnet sind, die jeweils in den entsprechenden Aufnahmen (EC3) angeordnet sind.

5. Deflektor nach einem der Ansprüche 1 bis 4, **dadurch gekennzeichnet, dass** mindestens ein erstes Kopplungselement (EC11) des Trägerteils (PS) in Form einer Lasche angeordnet ist, die in eine entsprechende Aufnahme des äußeren Elements (EE) eingeführt werden kann, die eines der zweiten Kopplungselemente (EC21) des letzteren (EE) bildet, um das Trägerteil (PS) in Bezug auf das äußere Element (EE) zu koppeln und zu positionieren, und dass mindestens ein weiteres erstes Kopplungselement (EC12) des Trägerteils (PS) angeordnet ist in Form einer Gewindebohrung, die gegenüber einer entsprechenden Durchgangsbohrung angeordnet werden kann, die in einer Wand (PAE) des äußeren Elements (EE) definiert ist, ein weiteres (EC22) der zweiten Kupplungselemente (EC2j) bildet und von einer Schraube (VF) durchsetzt werden kann, die in die Gewindebohrung (EC12) eingeschraubt werden kann.

6. Deflektor nach Anspruch 5, **dadurch gekennzeichnet, dass** das Stützteil (PS) mindestens zwei erste Kupplungselemente (EC11) umfasst, die in Form von allgemein L-förmigen Laschen angeordnet sind.

7. Deflektor nach einem der Ansprüche 1 bis 6, **dadurch gekennzeichnet, dass** die Zierkappe (ED) eine vierte Innenfläche (FI4) aufweist, die der ersten Außenfläche (FE1) des Trägerteils (PS) zugewandt ist und Befestigungslaschen (PF) aufweist, die Durchgangslöcher (TT) durchqueren, die in der Schnittstellendichtung (JI) definiert sind und gegen die zweite Innenfläche (FI2) des Umfangsrandes (BP) gefaltet sind, um die Schnittstellendichtung (JI) zu fixieren.

8. Deflektor nach Anspruch 7, **dadurch gekennzeichnet, dass** die Durchgangslöcher (TT) in der Schnittstellendichtung (JI) oberhalb von oberen vierten Kopplungselementen (EC4) und unterhalb von unteren vierten Kopplungselementen (EC4) definiert sind.

9. Fahrzeug (V), das mindestens ein äußeres Element (EE) umfasst, **dadurch gekennzeichnet, dass** es mindestens einen Abweiser (DV) nach einem der Ansprüche 1 bis 8 umfasst, der mit dem äußeren Element (EE) fest verbunden ist.

10. Fahrzeug nach Anspruch 9, **dadurch gekennzeichnet, dass** es vom Automobiltyp ist.

## Claims

1. A deflector suitable for fitting to an outer item of a vehicle, the deflector comprising i) a support component comprising a first inner face provided with first coupling items adapted to co-operate with second coupling items adapted to co-operate with said outer item in order to secure it to said outer edge, and a peripheral edge having second inner and outer faces adapted to be orientated respectively towards said outer item and towards the outside of said outer vehicle, and ii) an interface gasket coupled to said peripheral edge and having inner and outer portions disposed facing said inner and outer faces in order to be connected to said outer faces interposed between said outer item (EE) and said support component (PS), and iii) a trim (ED) secured to said support component (PS) by being installed facing a first outer face (FE 1) of the latter (PS) with interposition of said outer part (PE) of the interface seal (JI).

2. The deflector according to claim 1, wherein said peripheral edge is provided with third coupling items and said interface seal is provided with fourth coupling items co-operating with said third coupling items for coupling it to said support component.

3. The deflector as claimed in claim 2, wherein said third coupling items are defined on said second outer face of said peripheral edge, and wherein said fourth coupling items are defined on a third inner face of said interface gasket that is to be orientated towards said support component.

4. The deflector according to claim 2 or 3, wherein said third coupling items are arranged as housings, and wherein said fourth coupling items are arranged as protuberances housed respectively in said corresponding housings.

5. Deflector according to one of Claims 1 to 4, **characterised in that** at least one first coupling item (EC11) of said support component (PS) is arranged as a lug suitable for being inserted into a corresponding housing of said outer item (EE), constituents one of said second coupling items (EC21) of the latter (EE), to couple and position said support component (PS) by report with this outer item (EE), and at least one other first coupling item (EC12) of said support component (PS) is arranged as a threaded hole suitable for being placed facing a corresponding through hole, defined in a wall (PAE) of said outer item (EE), another (EC22) of said second constituents coupling items (EC 2 j) and adapted to be traversed by a screw (VF) intended to be screwed into said threaded hole (EC 12).

6. The deflector according to claim 5, wherein said support component comprises at least two first coupling items arranged in the shape of generally L-shaped lugs.

7. Deflector according to one of Claims 1 to 6, **characterised in that** said trim (ED) comprises a fourth inner face (FI4) orientated towards said first outer face (FE1) of the support component (PS) and comprising fixing lugs (PF) passing through through through holes (TT) defined in said interface seal (JI) and folded against said second inner face (FI2) of the peripheral edge (BP) in order to immobilise said interface seal (JI).

8. The deflector according to claim 7, wherein said through holes are defined in said interface joint above fourth upper coupling items and below fourth lower coupling items.

9. Vehicle (V) comprising at least one outer item (EE), wherein it comprises at least one deflector (DV) according to one of Claims 1 to 8, secured to said outer item (EE).

10. Vehicle according to Claim 9, **characterised in that** it is of the automobile type.
